(19) Europäisches Patentamt
European Patent Office
Office européen des brevets

(11) **EP 2 545 772 A2**

(12) **EUROPEAN PATENT APPLICATION**

(43) Date of publication:
**16.01.2013 Bulletin 2013/03**

(51) Int Cl.:
***A01K 31/18*** *(2006.01)* ***A01K 31/19*** *(2006.01)*

(21) Application number: **11250710.8**

(22) Date of filing: **05.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.08.2011 US 506455 P**
**13.07.2011 US 507230 P**
**18.07.2011 US 508869 P**

(71) Applicant: **Odom, Jr., William J.**
**Fairfax SC 29827 (US)**

(72) Inventor: **Odom, Jr., William J.**
**Fairfax SC 29827 (US)**

(74) Representative: **Crowhurst, Charlotte Waveney**
**Potter Clarkson LLP**
**The Belgrave Centre**
**Talbot Street**
**Nottingham NG1 5GG (GB)**

(54) **Avian house lighting apparatus and method**

(57) The invention is directed to a lighting system for an avian house comprising a feeding or watering system and a source (30) of LED lighting that emits light having a color selected from the group consisting of white, blue, or green, wherein the LED lighting is attached to the feeding or watering system at a height which corresponds to eye level to of the avian species to be fed or watered. The invention is also directed to a method for attract an avian species to a feeding or watering system using an LED lighting system.

Fig. 1

EP 2 545 772 A2

## Description

## BACKGROUND OF THE INVENTION

## CROSS REFERENCE TO RELATED APPLICATIONS

Thepresent application claims the priority benefit of U.S. Provisional Patent Application Serial No. 61/506,455, filed July 11, 2011, and 61/507,230, filed July 13, 2011, and 61/508869 filed July 18, 2011 which are incorporated herein by reference in their entirety.

(1) Field of the Invention

The invention relates generally to a lighting apparatus and method for attracting avian species to a food or water source.

## SUMMARY OF THE INTENTION

In an embodiment, the invention is directed to a lighting system for an avian house comprising a feeding or watering system and a source of LED lighting that emits light having a color selected from the group consisting of white, blue, or green, wherein the LED lighting is attached to the feeding or watering system at a height which generally corresponds to the eye level of the avian species to be fed or watered.

In another embodiment, the invention is directed to a method for attracting avian species to a feeding or watering system, the method comprising providing a feeding or watering system, providing a source of LED fighting that emits light having a color selected from the group consisting of white, blue, or green, wherein the LED lighting is attached to the watering system at a height which generally corresponds to the eye level of the avian species to be fed or watered, and maintaining the LED light source in a lit configuration to attract the avian species to the feeding or watering system.

## BRIEF DESCRIPTION OF THE DRAWINGS

A full and enabling disclosure of the present invention is set forth in the specification, which refers to the appended figures, in which:

Figure 1 illustrates an embodiment of the lighting system of the invention, shown in operation.

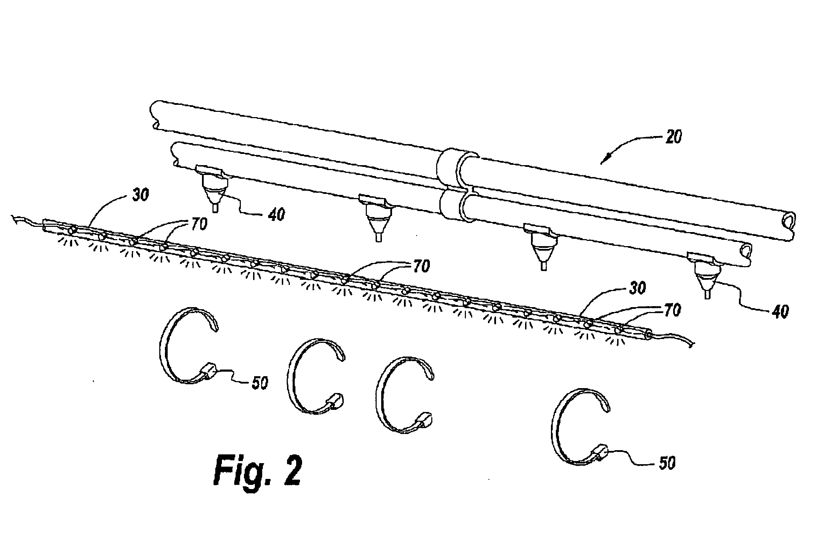

Figure 2 illustrates an embodiment of the lighting system of the invention, shown in separate pieces.

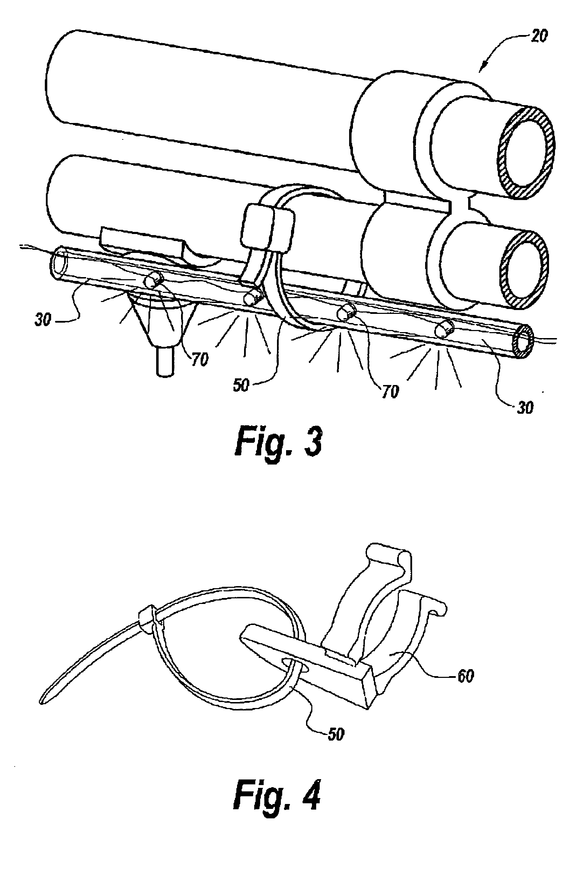

Figure 3 illustrates an embodiment of the lighting system of the invention.

Figure 4 illustrates an alternative attachment mechanism for the lighting system of the invention.

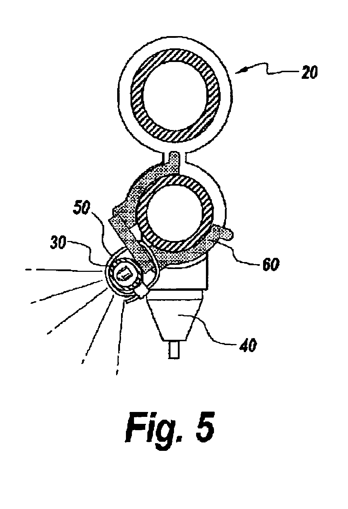

Figure 5 illustrates a cross-sectional view of the lighting system of the invention.

## DETAILED DESCRIPTION OF THE EMBODIMENTS

Reference now will be made in detail to the embodiments of the invention, one or more examples of which are set forth below. Each example is provided by way of explanation of the invention, not a limitation of the invention. In fact, it will be apparent to those skilled in the art that various modifications and variations can be made in the present invention without departing from the scope or spirit of the invention. For instance, features illustrated or described as part of one embodiment, can be used on another embodiment to yield a still further embodiment

Thus, it is intended that the present invention covers such modifications and variations as come within the scope of the appended claims and their equivalents. Other objects, features and aspects of the present invention are disclosed in or are obvious from the following detailed description. It is to be understood by one of ordinary skill in the art that the present discussion is a description of exemplary embodiments only, and is not intended as limiting the broader aspects of the present invention.

Avian species, including poultry, are very sensitive to light. Light not only allows them to be active and find their food and water, but it also stimulates their brains for seasonal reproduction. It is believed that fight is perceived not just through their eyes, but also through receptors in their brain, after penetrating the feathers, skin, and skull. Studies have shown that even blind birds respond to light.

Light is particularly important to poultry in the first four days of life. Some growers recommend 24 hours of light during the first three days of life to ensure that chicks, for example, learn to find food and water.

The inventors have discovered that during the first four days of life, poultry are attracted to particular light sources which, when associated with a water source, attract the poultry to the water source. The inventive apparatus and method lead the poultry to the water source unexpectedly quickly, thus preventing dehydration. The hydrated poultry are then able to find food sources more easily and gain weight more quickly than is possible with standard poultry operations, resulting in increased survival rates, weight, and feed conversion.

In an embodiment, the lighting source utilized in the invention may be a light emitting diode (LED). LEDs are solid-state semiconductor devices that convert electrical energy directly into light. LEDs are comprised of a semiconductor chip, or die, of which one side is bonded to the top of reflector cup, often called the anvil, which carries the negative current. The other side of the semiconductor is connected with a micro wire, often referred to as the whisker, which supplies the positive current. The semiconductor chip consists of two parts, a P-type semiconductor where holes dominate the region and an N-type semiconductor which is dominated by electrons. When they are sandwiched together, a PN junction is formed. When an electric current is applied to the chip through the lead, electrons are pushed across the junction into the P-region. There, electrons and holes meet and recombine and then release energy in the form of photons of light. The wavelength (color) of the light depends on the materials forming the PN junction. In an embodiment, the LED light source may be an organic LED, or an OLED.

Generally speaking, the emitted LED light utilized in the present invention may be in the visible, ultraviolet, and/or infrared wavelength spectrum-In an embodiment of the invention, the emitted light is in the visible light spectrum. By proper selection of semiconductor materials, LEDs can be constructed to emit white light or light of certain colors, such as red, blue, or green. LEDs offer advantages over incandescent light sources including lower energy consumption, longer lifetime, improved robustness, smaller size, faster switching, and greater durability and reliability.

The LED light source used in the invention may be any color known in the art. In an embodiment, the LED light source of the invention is a white light. In a particular embodiment, the LED light source comprises bright white or cool white light. In another embodiment, the LED light source comprises blue or green light. In any embodiment, the LED light may be coated with a phosphor. In an embodiment, the white light may be emitted by combining red, green, and blue light emitting layers. The color of the emitted light may depend on the materials used to make each LED light. In an example, a blue LED may include gallium nitride (GaN) or indium gallium nitride (InGaN). In another example, a green LED may include aluminum gallium phosphide (AlGaP).

In an embodiment, the wavelength associated with the blue LED may be between about 420 nm and about 520 nm. In a particular embodiment, the wavelength associated with the blue LED may be between about 440 nm and about 500 nm. In another embodiment, the wavelength associated with the green LED may be between about 480 nm and about 600 nm. In yet another embodiment, the wavelength associated with the green LED may be between about 500 nm and about 550 nm.

There are several approaches using LEDs to achieve white light, any of which are contemplated by the current invention. In an embodiment, the white light LEDs may include one phosphor material that absorbs a portion of the radiation emitted by the LED and re-emits radiation of a different color (wavelength). In this embodiment, the LED die or chip may generate blue light in the visible part of the spectrum and the phosphor may remit yellow light or a combination of green light and red light. The portion of the visible blue light generated by the LED that is not absorbed by the phosphor may mix with the yellow light or the combination of emitted green light and red light to provide light that appears to the eye as being white in color. In another embodiment, red, green, and blue LEDs can be combined to produce white light. In an embodiment, any method of generating white, blue, or green LED light may be utilized. In an embodiment, the LED light source may be monochromatic or multichromatic.

The correlated color temperature (CCT) provides a relative color appearance of a white light source, determined by comparing its hue with a theoretical, heated black-body radiator. CCT is specified in Kelvin (K) and corresponds to the absolute temperature of the blackbody whose chromaticity most nearly resembles that of the light source. The CCT of a white LED is determined by the light wavelength and power emitted by the LED die or chip used therein. The CCT range for white LED light, for example, is generally from about 2,500K to about 7,000K, with the lower color temperatures being referred to as "warmer"colors and the higher color temperatures being referred to as "cooler" colors. The particular naming of white light colors, based upon CCT, may vary based upon manufacturer.

In an embodiment, the LED light source has a CCTof from about 2,500K to about 7,000K. In another embodiment, the LED light source has a CCT of from about 2,700K to about 6,500K. In another embodiment, the LED light source has a CCT of from about 3,000K to about 6,500K.In another embodiment, the LED light source has a CCT of from about 3,500K to about 6.000K. In yet another embodiment, the LED light source has a CCT of from about 4,500K to about 6,500K. In a particular embodiment, the LED light source has a CCT of about 3,500K. The ranges provided herein are examples only and any individual color temperature or range of color temperatures between those set forth is contemplated by the invention.

In an embodiment, the intensity of the LED light source may be from about 10 to about 30 lux. In another embodiment, the intensity of the LED light source may be from about 20 to about 30 lux.

In an embodiment, the amount of light provided in lumens (lm) by the light source may be from about 0.10 lm to about 1.0 lm. In a particular embodiment, the amount of light provided may be about 0.75 lm.

In an embodiment, a power source may be configured to provide an AC input of from about '12 V to about 220 V. In another embodiment, a power source may be configured to provide an AC input of from about 24 V to about 110 V. In a particular embodiment, a power source may be configured to provide an AC input of about 120 V. In an embodiment, the DC output of the power source may be from about 12 V to about 220 V. In another embodiment, the power source may be configured to provide DC output of from about 24 V to about 110 V.

In an embodiment, the LED light source may be a strip light or a rope light. A strip light can be configured as a flat strip, with optional adhesive on one side. The LED lights are contained within the flat strip at intervals, behind a plastic or PVC layer. The lights on the strip can be cut and customized according to the desired length of the strip. A rope light is typically configured as a plastic or PVC rope with LED lights at intervals within the rope. In an embodiment, the LED light source is waterproof, water repellant, water resistant, moisture repellant, and/or moisture resistant. The plastic lens, rope, or cover over the LED light source may be clear or colored, depending on the effect or lighting color desired.

In an embodiment, the LED lights within the strip light or rope light may be from about $^1/_{16}$ inch to about 6 inches apart. In another embodiment, the lights may be from about ¼ inch to about 3 inches apart. In yet another embodiment, the lights may be from about ½ inch to about 2 inches part.

In an embodiment, the length of the strip or rope lighting may be from about 1 inch to about 1000 feet. In another embodiment, the length of the strip or rope lighting may be from about 1 foot to about 100 feet. In an embodiment, the length of the strip or rope lighting may correspond with the length of the watering system or water source.

In an embodiment, the diameter of the individual LED lights is from about 0.5 mm to about 8 mm. In another embodiment, the diameter of the individual LED lights is from about 1 mm to about 5 mm. In another embodiment, the diameter of the individual LED lights is less than about 8 mm. In a particular embodiment, the diameter of the individual LED lights is about 2 mm. In another embodiment, the size of the individual LED lights is about 2 mm in diameter by about 20 mm in length

In an embodiment, the emitting diode of the LED light may be mounted at eye-level with the poultry. Thus, the light may be emitted in a direction parallel with the eyes of the poultry. Said another way, in this embodiment, the diode of the LED light is configured such that it is perpendicular to the length of the strip or rope in which it is contained. The strip or rope light is then configured such that the emitted light is directed toward the eyes of the poultry. In an embodiment, the diode, and thus emitted light, is parallel to the floor of the poultry house and is positioned at or just above the eye level of the poultry. In an embodiment, the LEDs emit light from the top and sides of the diode in a hemispherical pattern. In an embodiment, the diode of the LED light is configured such that it is parallel to the length of the strip or rope in which it is confiained. In a particular embodiment, the light source may be configured such that the strip or rope lights emit light in two or more directions, the emitting directions being parallel to the floor of the poultry house and at eye level to the poultry. In still another embodiment, the light source may be configured to emit light in all directions. In yet another embodiment, the light source may be configured to emit light in 360 degrees.

The LED light source of the invention may have any configuration known in the art. In an embodiment, the LED source may be concave and/or round. In another embodiment, the LED light source may be an LED array. In an embodiment, the LED lights may be wired in series or in parallel.

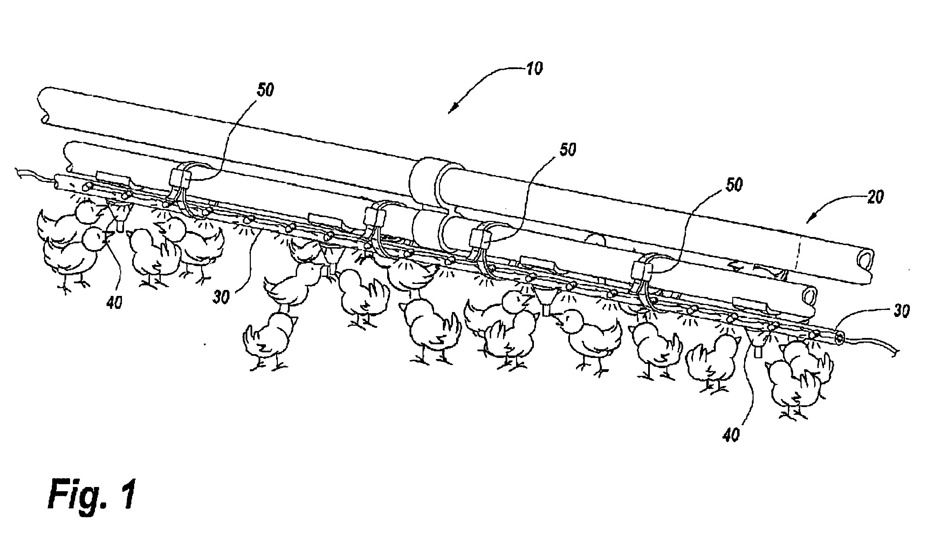

In a typical poultry house, watering systems are used to provide water to the birds. With reference to the drawings, and as particularly shown in Fig. 1, the present poultry watering system 10 utilizes an LED light source 30, as discussed herein, in combination with a watering system 20. Any watering system known in the art, or suitable for use, may be utilized in the invention. In an embodiment, the watering system may be a gravity watering system. In another embodiment, the watering system may be a low psi (0 to 10 psi) watering system. The water delivery device 40 of the watering system can be round, square, rectangular, or any configuration known in the art or suitable for using in such a watering system. In an embodiment, water delivery device 40 may be a nipple. The watering system may be configured with or without a drip pan and/or with cups, pans, or trays. In an embodiment, the lighting system could be used in conjunction with feeding systems for any avian species. In an embodiment, the watering system may be a Ziggity® watering system, available from Ziggity Systems, Inc., a Lubing watering system, available from Gillis Agricultural Systems, Inc., or a Val-Co™ watering system, available from ValcoCompanies, Inc.

In an embodiment, LED light source 30 of the invention is positioned on, near, or just above the water delivery device (such as a nipple) of the water source. In another embodiment, cups (not shown) may be utilized to contain the source water for the poultry. In this embodiment, LED light source 30 may be positioned on the ground, near the cups or may be attached to the base or lip of the cups. For turkeys, for example, the water could be placed in a 5-gallon bucket having a trough around the bucket's edge. In this embodiment, the LED light source of the invention could be configured just below the lip of the trough.

In an embodiment, the individual LED lights 70 may run along the entire length of the strip or rope light. In another embodiment, the individual LED lights 70 may be positioned at particular locations within the strip or rope light, for example, corresponding to the locations of the water delivery devices 40.

Any fastening mechanism known in the art may be utilized in the invention to attach the LED light source 30 to the watering system 20. In an embodiment, the fastening mechanism may be a series of plastic ties 50. In another embodiment, the fastening mechanism may be a clip 60, or any other fastener known in the art or useful in the invention. In an embodiment, the fastening mechanism may permanently affix the LED light source 30 to the watering system 20. In another embodiment, the fastening mechanism may removably affix the LED light source 30 to the watering system 20.

In an embodiment, the LED light source 30 may comprise bright white light and is configured in an LED rope light. In another embodiment, the LED light source 30 may comprise cool white light and may be configured in an LED rope light.

In an embodiment, the lighting system of the invention may be utilized during the first four days of life for the poultry. In another embodiment, the lighting system of the invention may be utilized for at least 1 day during the first four days of life for the poultry. In another embodiment, the lighting system of the invention may be utilized for at least 2 days during the first four days of life for the poultry. In an embodiment, the lighting system of the invention may be utilized during the entire life of the poultry. In an embodiment, the lighting system may be maintained in a lit configuration for 24 hours per day. In another embodiment, the lighting system may be maintained in a lit configuration for at least 20 hours per day. In another embodiment, the lighting system may be maintained in a lit configuration for at least 15 hours per day. As is known the art, the amount of light provided to the birds per day may vary according to the age of the birds and the purpose for which they are being raised.

In an embodiment, the invention may be useful in connection with the provision of water to any avian birds, such as chickens, quail, ducks, squab, pheasant, turkeys, and any other game birds. In an embodiment, the invention may be useful in connection with broiler chickens, breeder chickens, or pullet chickens. In an embodiment, the invention may be useful in connection with poults, hens, or poms.

In an embodiment, the invention may be useful in connection with the provision of food to avian birds. In this embodiment, the lighting system can be positioned near or attached to the feeding system, feed pans, or food source. The lighting system of the invention may attract the avian species to the food source in the same manner it attracts the birds to a water source. In a particular embodiment, the lighting system of the invention may be used to attract the birds to any location desired.

In an embodiment, the lighting system of the invention may be used in addition to natural lighting and/or standard lighting, overhead or otherwise that may be present in the avian house. In another embodiment, the lighting system of the invention may be used as a substitute for natural lighting and/or standard lighting, overhead or otherwise.

In an embodiment, the lighting system of the invention contains an adjusting mechanism capable of continuous or stepwise adjustment of illuminance and/or CCT. In an embodiment, the CCT of the light source may be tunable. In another embodiment, the poultry may be exposed to light in a stepwise or continuous manner, from the lowest level of illuminance to the highest level of illuminance and/or from the highest level of illuminance to the lowest level of illuminance. In an embodiment, the lighting system can be on a timer which may switch the lighting system on and off at timed intervals. In another embodiment, the lighting system of the invention may use LED lights that blink. In certain embodiments, some of the LED lights may blink while others remain in a continuous on or off configuration. In a particular embodiment, the lights that are nearest the nipple of the lighting system may blink.

Additionally, in an embodiment, the lighting system may be adjustable in height, such that the light can be maintained at eye level with the birds, regardless of their size.

Example 1

The average livability for quail, from birth until full grown (approximately 35-45 days), under standard lighting conditions known in the art, is approximately 72%. As will be shown in this example, the average livability for quail, from birth until full grown (approximately 35-45 days), under the inventive lighting conditions, was approximately 95%. This illustrates an improvement of as much as 18% in average livability when the present invention is utilized.

Example 2

The average chick, under standard lighting conditions, eats approximately $2/_{10}$ ounces per day during the first 4 days of life. As will be shown in this example, chicks ate approximately ½ ounce per day during the first 4 days of life under the inventive lighting conditions. Due to the increased food intake, the tested chicks quadrupled their body weight. For broiler chickens, this early improved growth cuts approximately 1-7 days off of the life cycle of the chicken. The farmer may save considerable costs on feed and may bring chickens to market sooner with heavier weights when the present invention is utilized.

Example 3

In this embodiment, a variety of colors of LED light sources were tested in a quail house to determine the colors most attractive to the birds. The tested colors/types of LED light sources were: cool white (LED rope), bright white (LED rope), warm white (LED strip), blue (LED strip), red (LED strip), yellow (LED strip), and green (LED strip). Each of the light sources tested was approximately 4 feet in length. In a quail house, each rope or strip was attached to a portion of a Ziggity® watering system, at eye level, and was separated from the next light source by about 3 feet After attaching the rope or strip to the watering pipe, just above the nipples, they were turned on.

Approximately 80,000 birds that were 1 day old were placed in the quail house. The birds immediately moved toward the cool white, bright white, blue, and green light sources. The birds were able to find water, due to the use of the present invention, within approximately 90 minutes. The birds were not attracted to, and did not move toward, the red, yellow, or warm white lights.

In these examples, the inventors were able to decrease the mortality rate from 27.4% to about 5%. That is, rather than approximately 72.6% of birds surviving to market, the percentage of birds surviving to market was approximately 95%. In these examples, the poultry increased in size from about the 30 percentile to about the 60 percentile. Similarly, in these examples, the size of the poultry was noticeably increased within 2 to 3 days of exposure to the lighting system.

Although particular embodiments of the invention have been described using specific terms, devices, and methods, such description is for illustrative purposes only. The words used are words of description rather than of limitation. It is to be understood that changes and variations may be made by those of ordinary skill in the art without departing from the spirit or the scope of the present invention, which is set forth in the following claims. In addition, it should be understood that aspects of the various embodiments may be interchanged both in whole or in part Therefore, the spirit and scope of the appended claims should not be limited to the description of the preferred versions contained therein.

**Claims**

1. A lighting system for an avian house comprising:

   a a feeding or watering system; and
   b a source of LED lighting that emits light having a color selected from the group consisting of white, blue, or green, wherein the source of LED lighting is attached to the feeding or watering system at a height which generally corresponds to the eye level of the avian species to be fed or watered.

2. The lighting system of claim 1 wherein the LED light source is white and has a correlated color temperature of from about 2,500K to about 7,000K, or from about 2,700K to about 6,500K, or from about 3,000K to about 6,500K.

3. The lighting system of claim 1 wherein the LED light source is white and is classified as cool white, or is classified as bright white.

4. The lighting system of claim 1, wherein the LED light source is blue and has a wavelength of from about 420 nm to about 520 nm, or from about 440 nm to about 500 nm.

5. The lighting system of claim 1, wherein the LED light source is green and has a wavelength of from about 480 nm to about 600 nm, or from about 500 nm to about 550 nm.

6. The lighting system of any one of the preceding claims, wherein the LED light source has an intensity of from about 10 to about 30 lux, or from about 20 to about 30 lux.

7. The lighting system of any one of the preceding claims, wherein the LED light source is a strip fight or rope light

8. The lighting system of claim7, wherein the emitting diode of the LED light source is positioned perpendicular to the length of the strip or rope light.

9. The lighting system of any one of the preceding claims, wherein the LED lighting is positioned adjacent to a food or water delivery device of the feeding or watering system.

10. A method for attracting avian species to a feeding or watering system, the method comprising:

    a providing a feeding or watering system;
    b providing a source of LED lighting that emits light having a color selected from the group consisting of white, blue, or green, wherein the LED lighting is attached to the feeding or watering system at a height which generally corresponds to the eye level of the avian species to be fed or watered;and
    c maintaining the LED light source in a lit configuration to attract the avian species to the feeding or watering system.

11. The method according to claim10, wherein the avian species is selected from the group consisting of poultry,chickens, quail, ducks, squab, pheasant, turkeys, and any other game birds.

12. The method according to claim10 or 11,wherein the light is maintained in a lit configuration for 24 hours per day.

13. The method according to any one of claims 10 to 12, wherein the avian species is between birth and about four days of age.

14. The method according to any one of claims10 to 13, wherein the method is utilized for at least the first four days of life for the avian species.

**Fig. 1**

EP 2 545 772 A2

**Fig. 2**

Fig. 3

Fig. 4

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61506455 A
- US 61507230 A
- US 61508869 A